# EUROPEAN PATENT APPLICATION

(11) **EP 4 818 138 A1**
(43) Date of publication of application: **07.10.2026**
(21) Application number: 25167548.4
(22) Date of filing: 31.03.2025
(51) Int. Cl.: C04B 28/02, C04B 20/02

(54) **SLOWING DOWN POZZOLANIC MATERIAL**

(71) Applicant: Etex Services NV, 1880 Kapelle-op-den-Bos (BE)
(72) Inventor: GIJBELS, Katrijn, 3530 Houthalen (BE)
(74) Representative: Etex Services NV - Etex IPSC

(57) **Abstract**

A waste material that is comminuted, carbonated and subsequently heat-treated at a temperature in the range of 360-500°C is used in an aqueous cementitious composition. The aqueous cementitious composition is for use for manufacturing cementitious products, such as fiber cement products. The heat-treatment has been found to slow down reactivity of the carbonated material as a pozzolanic material, therewith preventing premature hydration in the aqueous cementitious composition.

## Description

### FIELD OF THE INVENTION

The invention relates to the use of a cementitious binder and a pozzolanic material in an aqueous cementitious composition and for manufacturing cementitious articles thereof. The invention further relates to such aqueous cementitious composition and to cementitious products formed.

### BACKGROUND OF THE INVENTION

Carbonated cementitious powder - hereinafter also referred to as carbonated powder - is considered as a preferred choice of pozzolanic material due to its potential to reuse cementitious waste and to capture CO2, therewith reducing CO2 emissions related to the production of the cement clinker. Such carbonated cementitious powder may be used as a supplementary cementitious material to form a composite cement, as is for instance known from WO2023046498A1. Such carbonated cementitious powder may alternatively be added directly into an aqueous composition comprising cement or another cementitious material. One such process is known from EP4417589A1, wherein the carbonated cementitious waste originates from fiber cement waste material and the aqueous composition is processed to form a fiber cement article.

However, it was observed in investigations, that the strength development of cementitious products comprising carbonated cementitious powder as a pozzolanic material depends on the mixture formed with the carbonated cementitious powder. When essentially dry mixing the carbonated cementitious powder with fresh cement to form a composite cement or as a mortar material, there is a clear increase in strength. When however mixing the carbonated cementitious powder with fresh cementitious binder, such as Portland cement, in an aqueous composition, the strength of the resulting cementitious product is lower than the strength of a cementitious product comprising a corresponding amount of non-carbonated cementitious powder obtained from waste material, especially fiber cement waste material.

### SUMMARY OF THE INVENTION

It is therefore an object of the present invention to provide an improved method of manufacturing a cementitious product that comprises a carbonated cementitious powder as a pozzolanic material, wherein the cementitious product has enhanced strength in comparison to a corresponding cementitious product with non-carbonated cementitious powder from waste, also and particularly when the carbonated cementitious powder is mixed with a cementitious binder in an aqueous composition.

It is also an object to provide a method of generating such improved carbonated cementitious powder.

It is a further object to provide the use of a carbonated cementitious powder and a cementitious binder in an aqueous composition, from which such cementitious product may be manufactured, as well as to the aqueous composition.

It is again a further object to provide the resulting cementitious product.

According to a first aspect of the invention, said object is achieved in the use of a cementitious binder and a pozzolanic material in an aqueous cementitious composition, wherein said pozzolanic material is a material obtained by a method comprising carbonating a cementitious waste material and subsequently performing a heat treatment at a temperature in the range of 360°C to 500°C.

According to a second aspect of the invention, said object is achieved in a method of manufacturing a cementitious product, comprising the steps of:
- Providing a cementitious binder and a pozzolanic material, wherein said pozzolanic material is a material obtained by a method comprising carbonating a cementitious waste material and subsequently performing a heat treatment at a temperature in the range of 360°C to 500°C;
- Mixing said cementitious binder and said pozzolanic material into an aqueous cementitious composition, and
- Processing said aqueous cementitious composition into a cementitious product.

According to a third aspect of the invention, said object is achieved in an aqueous composition comprising a cementitious binder and a pozzolanic material, wherein said pozzolanic material is a material obtained by a method comprising carbonating a cementitious waste material and subsequently performing a heat treatment at a temperature in the range of 360°C to 500°C.

According to a fourth aspect of the invention, a cementitious product obtainable with the method of the invention and/or incorporating said pozzolanic material and/or a reaction product thereof with the cementitious powder is provided.

According to a further aspect of the invention, said object is achieved in a method of generating a pozzolanic material, comprising the steps of:
- providing recycled cement material,
- commuting the cement recycled material to obtain cementitious powder,
- carbonating the cementitious powder to obtain carbonated cementitious powder as pozzolanic material,
- slowing down the pozzolanic activity of the pozzolanic material by applying a heat treatment at a temperature in the range of 360°C to 500°C

The invention is based on the insight that carbonated cementitious powder is a pozzolanic material that reacts quickly when brought into contact with water. When however the pozzolanic material reacts well before the cementitious product gets formed in a green state, the pozzolanic material will not contribute to strength development of the cementitious product. **It** merely acts as a filler. Rather, it is believed as a preliminary hypothesis, that such early reaction would lead to a high amount of bound water, already prior to formation of the cementitious product, such as a green sheet. Such high amount would negatively impact strength and microstructural development, and may reduce the final density of the cementitious product. As opposed thereto, non-carbonated cementitious powder from waste material typically still comprises some non-hydrated or unreacted raw materials, such as non-hydrated Portland cement or non-reacted silica, such as quartz, which unreacted raw materials can contribute to strength development. **It** was found that the application of a heat treatment actually slows down the pozzolanic activity of carbonated cementitious powder. The term 'slowing down of pozzolanic activity' is herein used to express that the pozzolanic activity will be slower, as compared to non-heat treated carbonated material, during a first hour after that the heat-treated and carbonated material gets into contact with water or an aqueous medium, such as an alkaline solution. There is no sign that the pozzolanic activity is reduced. The resulting cementitious product was found to have increased strength, among other beneficial properties such as increased ductility and higher density. A heat treatment lower than 360°C would have insufficient effect in slowing down the pozzolanic activity, whereas a heat treatment above 500°C would damage the material of the carbonated cementitious powder, especially through calcium carbonate decomposition. Preferably, the temperature is not higher than 450°C, or even in the range of 370°C to 420°C. This reduces risk of damaging the carbonated cementitious powder and furthermore reduces energy consumption.

In a preferred embodiment, said carbonated cementitious powder is provided in a fibrous mixture further comprising organic fibers, and said heat treatment reduces an amount of organic fibers of said fibrous mixture, and more preferably the heat treatment is performed to remove all organic fibers of the fibrous mixture. Removing fibers from the carbonated cementitious powder is advantageous, as fibers in recycled, typically cured waste material do not longer contribute significantly to strength and ductility of the cementitious product. However, such fibers may increase water absorption and therewith reduce dimensional stability. A temperature of 400°C was found to be sufficient to remove cellulose fibers. Synthetic fibers such as polyvinyl alcohol and polypropylene will be removed as well at such temperature. Additionally, removal of organic fibers facilitates that the resulting cementitious powder has a better flowability and thus processability. Moreover, fibers may render the cementitious powder less uniform, i.e. to vary more in dependence of the waste material.

In a preferred embodiment, the cementitious waste material is comminuted prior to carbonating. Cementitious waste material exists from different sources and in different forms. Most generally, there is waste material in the form of a slurry, as used during production of cementitious products, and there is dry waste material, originating from used products, from products not meeting required quality standards, from sawing and grinding waste during production and installation. The latter dry waste material, which may contain water in its interior, for instance in an amount of up to 10% by dry weight, is typically provided in the forms of blocks, sheets, plates and/or pieces thereof, that require comminution prior to carbonating. The comminution step increases a surface area of the waste material and therewith renders a carbonation treatment more effective and/or less long.

In a further embodiment, the cementitious waste material in dry form comprising organic fibers is a fiber cement material or a calcium silicate material. Such fiber cement material is distinguished from concrete material in the absence of aggregates, and the presence of organic fibers, that particularly comprise cellulose fibers. Typically sand is not present either, or merely in the form of particles of which an outside portion has reacted with cement. As a consequence of the absence of aggregates and sand, the fiber cement material is a pure material and its recycling does not require a separation between concrete paste on the one hand and aggregates and/or sand on the other hand. It can therefore be efficiency recycled and prepared for carbonation. Calcium silicate materials are in use as fire protection materials, and particularly in the form of plates or sheets. These products generally comprise calcium silicate particles in combination with a matrix material, which could be cement-based, calcium-silicate based or different. Preferably, the calcium silicate particles are or comprise agglomerates of crystalline wollastonite, xonotlite, tobermorite and/or amorphous calcium silicate hydrates.

In one implementation, the cementitious waste material in dry form has a density of higher than 1.0 kg/dm³ or even higher than 1.2 kg/dm³. This implementation especially applies to fiber cement products, but additionally also to certain calcium silicate products. Such products are known in the art as medium-density and high-density fiber cement products. Beyond being well-characterized, these products typically do not include major additives, such as low-density additives to obtain a low-density product. Hence, the effectively available raw material for generating the desired carbonated powder is a medium-density or high-density fiber cement product.

The fiber cement materials may be either air-cured or autoclave-cured. A combination of both may also be used as the cementitious waste material. Air-cured fiber cement material comprises cement as its binder, preferably Portland cement. The cement content thereof is generally at least 50% by weight, and typically at least 70% by weight. Increasing content of recycled material and launching of composite cements may however reduce the amount of Portland cement. Upon curing in air, Portland cement is converted into an amorphous calcium silicate hydrate gel. Autoclave-cured fiber cement material is produced from a composition comprising both cement and silica in similar quantities, typically at molar ratios of 0.75 to 1.25. The cement is preferably Portland cement, and the silica is preferably quartz. Such autoclave-cured fiber cement material preferably further comprise a source of aluminum, such as bauxite, aluminiumtrihydroxide (ATH), kaolin, metakaolin, perlite. It is known that the presence of some aluminum is beneficial for the development of strength of the products. Moreover, such aluminum is also effective for generating the alumina-silica phase during carbonation. Further features of air-curable fiber cement compositions, autoclave-curable fiber cement compositions and the curing procedures are well-known in the art.

An advantageous production process for such fiber cement products is the Hatschek process, while alternative manufacturing processes, such as a flow-on process, are not excluded. Hence, the preferred raw material is a cured fiber cement material obtained by manufacturing according to the Hatschek process. In the Hatschek process, a stacked laminate of a plurality of monolayers is formed, each monolayer typically having a thickness of 0.1 to 0.9 mm and based on a composition comprising cement, SiO2 and cellulose fibers, and any optional ingredients depending on the specific process, such as synthetic fibers. Dewatering of these monolayers occurs at several stages of the Hatschek process. The resulting green sheet is compressed, in order to achieve a desired density. For high density products, the compression force is in the range of 20 MPa to 30 MPa. Autoclave-cured material made by means of the Hatschek process is characterized by a comparatively high tobermorite content, as this is the calcium silicate phase that ensures strength notwithstanding the low amount of cement. Fiber cement products are frequently manufactured with the Hatschek process, but the Hatschek process is furthermore in use for the manufacture of calcium silicate boards, with a density of typically at most 1.0 kg/dm3 and wherein cement is not present or merely used as an additive in amounts of for instance up to 10% by weight, such as for instance disclosed in GB2262543.

Generally, autoclave-cured fiber cement waste comprises at least 4% by weight of organic fibers and may be up to 15% by weight (based on total dry weight). Preferred amounts are in the range of 6-12% by weight, such as 7-10% by weight. Such fibers may reduce strength of any fresh cement product in which the carbonated material is included. Typically, the organic fibers are cellulose fibers, as most synthetic fibers, such as polyvinyl alcohol fibers do not withstand the conditions of autoclave curing. However, it is not excluded that synthetic fibers are present in a limited amount, such as for instance aramide fibers. Air-cured fiber cement waste generally comprises from 2% to 10% by weight (based on total dry weight) of fibers, and preferably from 2% to 5% by weight (based on total dry weight). Fibers used in air-cured fiber cement are typically selected from the group of cellulose fibers, polyvinylalcohol fibers, polypropylene fibers, glass fibers, basalt fibers, and polyethylene fibers, the latter for instance in the form of fibrids or fibrils, which is also referred to a synthetic wood pulp.

Comminution of the waste material is known per se, for instance from WO2024/003277A1, and may comprise a first step of crushing waste material followed by a second step of milling or grinding said crushed waste material. More preferably, such further comminution step is a grinding step is for instance embodied by a roller mill or a pendulum mill. The grinding is preferably followed by air-classification. Very good results have been achieved by using a vertical roller mill, in which the air-classifier is incorporated. The ground particles will herein be moved upwards to the air-classifier. It is deemed that this moving upwards within a single reactor is beneficial to enable removal of the fibers from the cement. It is especially preferred to ensure that the reactor is heated, for instance to a temperature of at least 40°C, or even at least 60°C. Bringing the ground particles in contact with heated air leads to drying, which is again deemed beneficial for an adequate size classification and therewith subsequent separation. Upstream of grinding, the waste material may be pretreated, for instance for removal of (macroscopic) contaminants such as plastic parts may be performed, as known in waste recycling. Such pretreatments may be performed before or after crushing, such as to a median particle size in the range of 2mm to 4 cm, preferably 5 mm to 3 cm.

In again a further embodiment, the waste powder that is provided for carbonation, has a particle size distribution such that the d90 is less than 150 µm, preferably less than 100 µm, and wherein the d50 is preferably in the range of 10-60 µm, preferably 20-50 µm. The d50 is also known in the art as the median. Such a particle size distribution has the advantage that the powder has a sufficient surface area for effective carbonation. It is moreover feasible to obtain such particle size distribution in a limited number of comminution and separation steps.

In a further embodiment, the waste powder is wetted prior to and/or during the carbonation treatment. Wetting preferably occurs to a mass ratio of water over binder (w/b) of at least 0.20, and preferably at most 0.4, and more preferably in the range of 0.25-0.35, when measured at the start of the carbonation step. The presence of sufficient water is understood to contribute to effective carbonation, i.e. the formation of CO32- from CO2 and H2O via H2CO3 and/or HCO3-, as known per se.

The carbonation step may itself be carried out in various ways. In one implementation, the carbonation is performed in a plurality of cycles, wherein prior to each cycle the cementitious powder is de-agglomerized and wetted. Alternatively, a specific reactor may be provided, wherein the cementitious powder is wetted and/or de-agglomerized during the carbonation, for instance by means of an effective mixing device. Zajac et al provide one implementation in Cement and Concrete Research, 130 (2020), 105990.

According to a preferred implementation, the carbonation of the waste material occurs according to a so-called semi-dry method, wherein CO2 is added as a gas or a supercritical liquid and the waste material may be wetted on its surfaces, for instance by spraying water and/or by providing water in vapour or gas form. The semi-dry method is deemed an alternative to a wet method, wherein the waste material is present in an aqueous bath or slurry, and CO2 gas is fed into said aqueous bath or slurry. An advantage of the semi-dry method is that it may accelerate the carbonation step, for instance by performing this at higher temperatures than room temperature, and even above 80 degrees or above 100°C, and/or by performing it at higher pressures (and/or other conditions), wherein the CO2 transforms into a supercritical liquid that has enhanced reactivity.

The heat treatment may be performed subsequent to the carbonation step with or without any intermediate period or any intermediate treatment. Examples of optional intermediate treatments include a drying step, a comminution step by way of milling, sawing or the like, a mixing step. Preferably, the heat treatment is performed at a temperature of 375°C to 425°C, such as at 480°C to 520°C. Duration of the heat treatment is for instance 1 to 10 hours, such as 3 to 5 hours. This heat treatment has been found to result in slowing down of the pozzolanic activity of the carbonated cementitious powder. Simultaneously therewith, organic fibers get removed.

In use, the thus heat treated, carbonated cementitious powder is mixed with a cementitious binder and water or another aqueous medium (such as an alkaline aqueous medium) into an aqueous composition. The aqueous composition will be a dispersion or suspension of solid particles in the aqueous medium. The relative amount of aqueous medium relative to the cementitious solids (carbonated cementitious powder and cementitious binder) is typically at least 1. **It** is not excluded that the carbonated cementitious powder is added to an aqueous composition that comprises the cementitious binder. The cementitious binder generally comprises cement, such as Portland cement, though other cementitious binders are not excluded. **In** case that a step of autoclave-curing is foreseen in the manufacture of the cementitious product, a source of silica will be present in sufficient quantity to engage in a reaction with the cement and/or hydratation products thereof during autoclave-curing. The preferred choice of silica is quartz. For sake of correspondence with air-cured technology, the said source of silica will be deemed part of the cementitious binder. Thus, when in the following reference is made to a weight ratio between the carbonated cementitious powder and the cementitious binder, the amount of said cementitious binder is deemed to include both the amounts of the cement and the source of silica. Preferably said weight ratio is in the range of 0.1 to 0.5.

The aqueous composition may comprise further raw materials, depending on the desired cementitious product and/or its manufacturing process. **In** order to prepare a fiber cement product, the aqueous composition further comprises fibers, among which organic fibers. Cellulose is generally used as process fiber. For reinforcement fiber different options are available, depending on the manufacturing process. Examples are cellulose, synthetic polymer fibers such as polyvinyl alcohol and polypropylene, aramide, basalt and (alkaline-resistant) glass fibers. Further optional ingredients of the aqueous compositions are for instance fillers, process and rheology additives, an aluminium-containing mineral or ingredient, such as kaolin, aluminium trihydrate, fly ash and the like.

The aqueous cementitious composition is thereafter processed into a cementitious product. Generally, processing of a cementitious composition comprises the manufacturing of a green, uncured article, followed by a curing step. Optionally, the green article may be subjected to a further treatment prior to the curing step. Examples of such further treatments include a shape modification step, so as to modify the surface shape and/or to apply corrugation into a sheet; a compression step, so as to densify the article; a chemical treatment step, for instance the application of a hydrophobation agent and/or the application of a paint or visually apparent coating or material onto one or more surfaces of the green article. Processing technologies for manufacture of cementitious products are known per se and include casting, moulding, spraying as well as processes such as the Hatschek process, flow-on process and the Magnani process, in which an aqueous cementitious composition is treated to obtain ordered layers and to ensure controlled dewatering during the process. Curing processes include air-curing and autoclave-curing, both of which may be preceded by any precuring step.

**In** preferred embodiments the aqueous cementitious composition has a water to solids mass ratio of at least 1, preferably at least 1.5 and more preferably at least 2. Such an aqueous cementitious composition with a water to solids ratio of at least 1.5 is also known as a slurry.

Good results have been obtained with the use of the heat-treated carbonated powder in autoclave-cured and air-cured fiber cement products, both in situations wherein a compression step was applied on the green article and wherein no compression step was applied on the green article. Use can be made herein of heat-treated carbonated powder obtained from recycling of autoclave-cured fiber cement waste and from recycling of air-cured fiber cement waste. Most preferably, use is made of heat-treated carbonated powder obtained from recycling of autoclave-cured fiber cement waste, and/or a mixture of autoclave-cured fiber cement waste and air-cured fiber cement waste. The use of the heat-treated carbonated powder in autoclave-cured fiber cement products may have a larger effect than the use of heat-treated carbonated powder in air-cured fiber cement products. When applying a compression step on the green article, the effect is deemed to increase.

Besides positive effects on the strength, it was found that the use of heat-treated carbonated cementitious powder has additionally positive effect on ductility and elasticity of the resulting cementitious product, as will be elucidated hereinafter with reference to the examples.

For sake of clarity, it is observed that any of the preferred embodiments and implementations discussed hereinabove or hereinafter with reference to the examples and/or as recited as dependent claims, are deemed applicable to any and all aspects of the invention.

### EXAMPLES

### Example 1 generation of carbonated cementitious powders

Air-cured fiber cement waste was obtained from the production of corrugated sheets within the Etex Group. The air-cured fiber cement waste was uncoated and free of reinforcement strips. It is not compressed. Autoclave-cured fiber cement waste was obtained as production waste within the Etex group. The waste material was compressed and had a density of 1.6 kg/dm3 and rendered hydrophobic by application of a hydrophobation agent at its surfaces. The waste material was first shredded, then crushed to an average size in the range of 0.5-2 cm and thereafter ground in a vertical roller mill apparatus. The used vertical roller mill apparatus included a vertical roller mill and an air classifier. Heated air was fed into the chamber of the vertical roller mill to dry the ground waste material and therewith remove humidity liberated from the (interior of the) fiber cement waste. Subsequently, the ground material was sieved using a vibrating tumbler sieve with a sieve mesh of 150µm. Part of this material were subjected to carbonation. Thereto, the material was spread in aluminium dishes, which were applied in an environment with a temperature of 60°C, a relative humidity of 90% and a CO2 concentration of 20volume%. The material remained 96 hours in said carbonation environment. This resulted in carbonation of the material. Thereafter, CO2 concentration and relative humidity were changed to ambient conditions (less than 0.05vol% CO2), and the material remained another 24 hours at 60°C so as to dry. Finally, the carbonated and dried material was heated in an oven during 4 hours at 400°C.

It is believed by the inventors that the heat treatment results in removal of bound water, especially from a hydrated alumina-silica gel. This alumina-silica gel has pozzolanic activity and is formed upon carbonation together with CaCO3. Bound water is further removed during the heat treatment from remaining uncarbonated hydrated cement paste (among other minerals containing chemically bound water, such as hydrotalcite). Additionally, organic fibers get removed as will be discussed with reference to Tables 1 and 2.

### Example 2 - characterization of different samples

Generally, the CO₂-content in a sample can be derived from the total inorganic content (TIC), by multiplying the TIC with the ratio of molar mass of CO₂ to C (i.e. 3.667). The TIC can be found by measuring the total carbon content (TC) and the total organic carbon content (TOC) in a sample. The TIC is the difference of TC and TOC. As specified for instance in EN13639:2017, TOC and TC can be determined by oxidizing a sample at a temperature of 1300°C. In order to measure the TOC, the matter contributing to TIC needs to be removed first. This is done by treatment of a dried sample with strong acid, such as phosphoric acid (for instance in a 1:1 ratio). This determination of CO₂-content was performed for the cementitious powders 1 and 2 obtained in accordance with Example 2. Use in made of a carbon/sulfur analyzer EMIA-320V from Horiba to quantify TC and TOC, enabling calculation of TIC. The carbonation degree is determined as the CO2 degree relative to the theoretically maximum CO₂ degree as determined from the calcium and magnesium contents determined in XRF. The results are shown in Table 1.

The waste materials prepared in accordance with Example 1 were characterized for their carbon contents (TC, TIC, TOC), CO2, as well as cellulose fiber content and polyvinyl alcohol (PVA) fiber content, the latter only in the case of air-cured waste. Samples were taken after milling, after milling and sieving, after milling, sieving and carbonation and after milling, sieving, carbonation and the heat treatment at 400°C. The results are shown in Table 1 and Table 2.

**Table 1 - fiber content of waste materials, samples 1-3 and 5-7 being comparative**

| | wt% | | | | | Cellulose | PVA |
|---|---|---|---|---|---|---|---|
| 1* | Aircured waste | Milling | - | - | - | 2.5 | 1.3 |
| 2* | | Milling | sieving | - | - | 2.2 | 0.4 |
| 3* | | Milling | sieving | Carbonation | - | 2.3 | 0.11 |
| 4 | | Milling | sieving | Carbonation | 400 °C | 0.0 | 0.0 |
| 5* | Autoclave-cured waste | Milling | - | - | - | 6.1 | - |
| 6* | | Milling | sieving | - | - | 3.9 | - |
| 7* | | Milling | sieving | Carbonation | - | 3.5 | - |
| 8 | | Milling | sieving | carbonation | 400 °C | 0.0 | - |

**Table 2 - organic contents (TC, TIC, TOC) and CO2 content in powders from air-cured and autoclave-cured fiber cement waste materials**

| | wt% | | | | | TC | TOC | TIC | CO2 |
|---|---|---|---|---|---|---|---|---|---|
| 1* | Aircured waste | Milling | - | - | - | 3.9 | 1.9 | 2.0 | 7.4 |
| 2* | | Milling | sieving | - | - | 3.5 | 1.2 | 2.2 | 8.2 |
| 3* | | Milling | sieving | Carbonation | - | 8.0 | 1.1 | 6.9 | 25.4 |
| 4 | | Milling | sieving | Carbonation | 400 °C | 7.2 | 0.07 | 7.1 | 26.1 |
| 5* | Autoclave-cured waste | Milling | - | - | - | 3.7 | 2.8 | 1.0 | 3.5 |
| 6* | | Milling | sieving | - | - | 2.7 | 1.8 | 0.9 | 3.3 |
| 7* | | Milling | sieving | Carbonation | - | 5.4 | 1.6 | 3.8 | 13.9 |
| 8 | | Milling | sieving | carbonation | 400 °C | 3.8 | 0.12 | 3.7 | 13.5 |

It is apparent from Table 1, that a heat treatment after carbonation removes all remaining organic fibers of whatever material, i.e. both cellulose and PVA. It is further apparent that cellulose fibers are not or hardly removed in the course of carbonation. Reasons for a decrease in cellulose fiber content during carbonation of autoclave-cured waste is currently not fully understood. It is believed that the cellulose fibers, or at least part thereof, is more anchored into the cement matrix. Cellulose fibers are generally refined prior to their use in fiber cement, leading to development of fiber strands. Increases in - relative - contents during a process step, as shown in Tables 1 and 2 are deemed due to reductions in total amounts..

The data in Table 2 confirm the analysis on fiber content. Sieving results in reduction of the total organic carbon (TOC) content, and therefore also the total carbon (TC) content. Carbonation results in a major increase in the total inorganic carbon (TIC) content, and a slight reduction in the TOC content. The heat treatment reduces the organic carbon content to virtually zero (in the experiment even zero), corresponding with complete removal of the fibers.

### Example 3

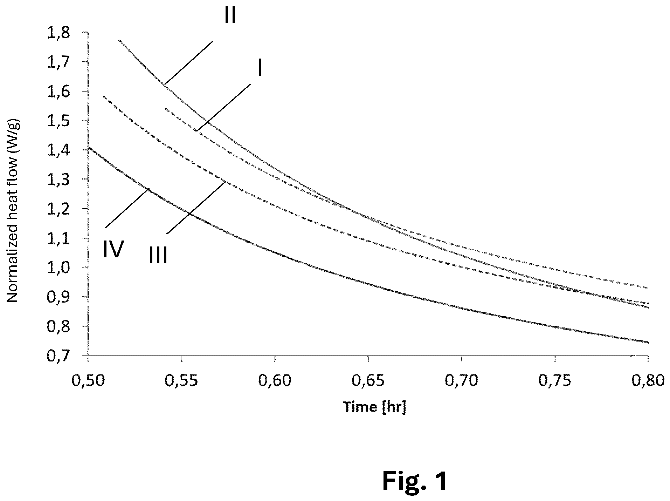

Mortars were prepared comprising in each case 80% by weight Portland cement type I (CEM I) and 20% by weight carbonated waste, by means of dry mixing. Water was added as needed to homogenize the mortar. Sample identification is given in Table 3. Normalized heat flow for the period from 0.50 hour to 0.80 hours are shown in Fig. 1 based on calorimetry. As is apparent from Fig. 1, the samples that had undergone a heat treatment had lower heat flow than those that were not heat treated. This seems consistent with the results shown in Fig. 3 of WO2023/046498A1 for composite cements comprising 40% by weight of carbonated powder and 60% by weight of cement clinker, even though the absolute values are not one-to-one comparable. It is furthermore apparent from Fig. 1 that the decrease in heat flow is larger for samples from autoclave-cured waste than for the samples from air-cured waste.

**Table 3 - mortar samples prepared with carbonated powders**

| Sample | Carbonated waste type |
|---|---|
| I* | 3 |
| II | 4 |
| III* | 7 |
| IV | 8 |

### Example 4 - preparation of air-cured products comprising carbonated powders

Aqueous cementitious compositions were prepared with carbonated powders generated in accordance with example 1 and characterized in accordance with example 2. Experiments were further conducted with uncarbonated powders. The aqueous cementitious compositions further comprise Portland cement type I (CEM I) and fibers and other conventional ingredients. Formulations are shown in Table 4. All samples contained the same fibers mixture of cellulose process fibers and polyvinyl alcohol (PVA) fibers in amount of 3.0% and 2.2% by weight respectively. All samples further included calcium carbonate with d50 of 8.3 µm and d90 of 62 µm (as measured by laser diffraction), and 6.0% by weight of microsilica. The aqueous cementitious compositions were used to prepare test samples by means of sedimentation, and to prepare test samples by means of the Hatschek process on a pilot line equipment. The test samples were cured afterwards during two weeks at ambient conditions. The curing further included a precuring step performed at 40-60°C during 8 hours.

**Table 4 - formulations of aqueous cementitious compositions. Reference sample 1 is an average of two different tests. Other ingredients are identified in the text. The number of the powders refers to the numbering used in Table 1 and 2. All data in Table 4 are reported as weight% based on dry weight of the composition.**

| | REF | REF2 | 1 | 2 | 3 | 4 | 5 |
|---|---|---|---|---|---|---|---|
| CEM I 42,5N | 78,8 | 68,8 | 63,8 | 63,8 | 63,8 | 58,8 | 58,8 |
| Uncarbonated (powder 2) | - | - | 15,0 | - | - | - | - |
| Carbonated (powder 3) | - | - | - | 15,0 | - | 20,0 | - |
| Carbonated and heat treated (powder 4) | - | - | - | - | 15,0 | - | 20,0 |
| Calcium carbonate | 10.0 | 20.0 | 10.0 | 10.0 | 10.0 | 10.0 | 10.0 |
| Other ingredients | 11.2 | 11.2 | 11.2 | 11.2 | 11.2 | 11.2 | 11.2 |

The resulting cementitious products were characterized for strength, ductility and density and the results are shown in Table 5. The modulus of rupture (SMOR, typically expressed in Pa = kg/m2.s), the E-modulus (MPa) of each of the samples was measured by making use of a UTS/INSTRON apparatus (type 3345, cel = 5000N). The limit of elastic deformation (dMOR, in mm) and the stress at the limit of elastic deformation (iMOR, in J/m²) were measured by making use of a UTS/INSTRON apparatus (type 3345, cel = 5000N) with software Bluehill by Instron (Norm EN12467 and related norms). Measurements were performed under air-dry conditions and underwater-saturated conditions (after immersion in a water bath at 20°C and drying at room temperature). As the trends largely correspond, merely data under saturated conditions are reported herein.

**Table 5 -Mechanical strength of air-cured products using formulations of Table 5**

| | REF | REF2 | 1* | 2* | 3 | 4* | 5 |
|---|---|---|---|---|---|---|---|
| SMOR (MPa) | 20.9 | 19.8 | 18.1 | 20.8 | 21.2 | 18.0 | 19.7 |
| dMOR (mm) | 7.2 | 7.8 | 8.5 | 8.5 | 7.4 | 7.6 | 7.8 |
| IMOR (kJ/m²) | 4.2 | 4.2 | 4.3 | 4.9 | 4.3 | 4.1 | 4.6 |
| E-modulus (GPa) | 12.1 | 10.5 | 9.6 | 10.8 | 12.0 | 8.9 | 10.0 |
| Density (kg/dm³) | 1.55 | 1.46 | 1.40 | 1.44 | 1.46 | 1.39 | 1.40 |

Several observations can be made in relation to the strength data Table 5. In comparison to the first reference (REF), the second reference (REF2) has lower strength, lower E-modulus and lower density. This is consistent with the formulation, as REF2 contains 10% less cement, which is replaced by an additional 10% of calcium carbonate. The samples 1-5 include even lower amounts of cement. In samples 1-3, 15% of the cement is replaced, and in samples 4-5 20% of the cement. Roughly half of the carbonated powder is calcium carbonate, whereas the other half is the pozzolanic alumino-silica gel.

When using 15% of uncarbonated waste (sample 1), the density reduces, which can be attributed to the presence of additional fibers and a lower dense packing of the material. The strength (SMOR) decreases relative to REF1 and REF2. E-modulus is also lower than that of REF2, whereas iMOR and dMOR are higher. Under air-dry conditions, the strength of sample 1 turns out comparable to that of REF2.

The results of using 15% of carbonated waste (sample 2, 3) are quite comparable. The strength of the heat-treated sample is somewhat higher, and the density is higher as well. dMOR and iMOR are higher in sample 2 that did not undergo a heat treatment, but E-modulus is higher in sample 3 that was heat treated.

The results of using 20% of carbonated waste (sample 4,5) show a larger difference between the sample with and without heat-treatment on the carbonated powder. The performance of the sample 4 without heat treatment is just comparable to that of sample 1 with uncarbonated waste. The performance of sample 5 is close that that of Reference 2, which however contains 10% less cement. In the air-dry measurements, the performance of samples 4 and 5 is better than that of reference 2 and sample 1, with sample 5 outperforming sample 4 on all measured properties.

It can be concluded that the performance of a heat treatment on carbonated air-cured waste, when reused for the manufacture of air-cured products, has a positive impact on mechanical strength. The heat treatment furthermore appears to allow use of higher amounts of waste material to replace cement.

### Example 5 - preparation of autoclave-cured products comprising carbonated powders

Aqueous cementitious compositions were prepared with carbonated powders generated in accordance with example 1 and characterized in accordance with example 2. The aqueous cementitious compositions further comprises Portland cement type I (CEM I) and fibers and other conventional ingredients. The aqueous cementitious compositions were used to prepare test samples by means of sedimentation. The test samples were cured afterwards by autoclave-curing. The curing further included a precuring step performed at 40-60oC during 8 hours. Autoclave-curing was performed at 5 bar at 170°C.

Tests were performed for two different kinds of waste, being the air-cured waste and the autoclave-cured waste, with a non-carbonated reference. All samples included 8% cellulose fibers and 4% aluminiumtrihydrate (ATH). Formulations can be found in Table 6. All formulations were used as aqueous compositions through addition of water.

**Table 6 - formulations for autoclave-cured cementitious products comprising carbonated powder. All data in weight% based on dry weight of the formulation.**

| | Carbonated | heat treated | REF | 11 | 12 | 13 | 14 | 15 | 16 |
|---|---|---|---|---|---|---|---|---|---|
| CEM I | | | 35.5 | 30.5 | 30.5 | 30.5 | 30.5 | 30.5 | 30.5 |
| Quartz | | | 52.5 | 47.5 | 47.5 | 47.5 | 47.5 | 47.5 | 47.5 |
| ATH | | | 4.0 | 4.0 | 4.0 | 4.0 | 4.0 | 4.0 | 4.0 |
| | | | | | | | | | |
| Air-cured Waste | No | No | | 10.0 | | | | | |
| Air-cured Waste | Yes | No | - | | 10.0 | - | | - | - |
| Air-cured waste | Yes | Yes | - | | - | 10.0 | | - | - |
| Autoclaved waste | No | No | | | | | 10.0 | | |
| Autoclaved waste | Yes | No | - | | - | - | | 10.0 | - |
| Autoclaved waste | Yes | Yes | - | | - | - | | - | 10.0 |
| Cellulose Fibers | | | 8.0 | 8.0 | 8.0 | 8.0 | 8.0 | 8.0 | 8.0 |

The resulting cementitious products were characterized for strength, ductility and density. Tests were done underwater-saturated conditions, in accordance with the method as specified hereinabove. Results are shown in Table 7

**Table 7 - mechanical strength (SMOR), maximum stress at the limit of elastic deformation (iMOR), E-Modulus (E-MOD) and density for autoclave cured products comprising carbonated powders.**

| | REF | 11* | 12* | 13 | 14* | 15* | 16 |
|---|---|---|---|---|---|---|---|
| SMOR (MPa) | 15.8 | 15.5 | 15.2 | 15.4 | 15.8 | 16.4 | 17.3 |
| iMOR (J/m²) | 3.2 | 3.8 | 3.2 | 3.6 | 4.1 | 3.9 | 4.4 |
| E-MOD (MPa) | 8.5 | 7.8 | 8.1 | 7.9 | 7.8 | 8.1 | 8.3 |
| Density (g/cm³) | 1.39 | 1.32 | 1.34 | 1.34 | 1.36 | 1.34 | 1.35 |

The data in Table 7 indicate that both SMOR and iMOR increase when a heat treatment at 400°C is applied onto the carbonated powder. This applies for carbonated powder based on air-cured waste (samples 11 and 12) and carbonated powder based on autoclave-cured waste (samples 13 and 14). The performance increase turns out more significant for carbonated powder based on autoclave-cured waste than for carbonated powder based on air-cured waste. Moreover, the samples comprising carbonated powder from autoclave-cured waste have a higher strength (SMOR) and higher iMOR than the reference sample.

### Example 6 - further preparation of autoclave-cured products comprising carbonated powders

A further experiment was set up, in which powders based on autoclave-cured waste were incorporated into autoclave-cured fiber cement product. In this case, 15% of waste was included. The manufacturing process was the Hatschek process, for which a pilot line was used. The resulting sheets were compressed at a pressure of 230 kg/cm² after their manufacture and prior to autoclave-curing. Conditions for autoclave-curing were not changed. Table 8 shows the formulations of the aqueous compositions as used. Water was present in excess to form a slurry suitable for running on the Hatschek process . Other ingredients included ATH, kaolin, calcium silicate, calcium hydroxide and pigment in amounts that were kept constant during the experiment.

**Table 8 further formulations, all data in weight% based on dry weight of the composition.**

| | | REF | 21 | 22 | 23 |
|---|---|---|---|---|---|
| Cement I | | 26.5 | 26.5 | 26.5 | 26.5 |
| Quartz | | 27.7 | 27.7 | 27.7 | 27.7 |
| CaCO3 | | 15.0 | - | - | - |
| Autoclave-cured waste | Not carbonated, not heated | - | 15.0 | - | - |
| Autoclave-cured waste | Carbonated, not heated | - | - | 15.0 | - |
| Autoclave-cured waste | Carbonated, heated at 400°C | - | - | - | 15.0 |
| Cellulose fibers | | 7.7 | 7.7 | 7.7 | 7.7 |
| Other ingredients | | 23.1 | 23.1 | 23.1 | 23.1 |

Results as measured underwater saturated conditions are shown in Table 9.

**Table 9 mechanical strength (SMOR), maximum stress at the limit of elastic deformation (iMOR), E-Modulus (E-MOD) and density for autoclave cured products comprising carbonated powders.**

| | REF | 21 | 22 | 23 |
|---|---|---|---|---|
| SMOR (MPa) | 18.5 | 18.0 | 17.3 | 19.0 |
| iMOR (J/m²) | 1.11 | 0.91 | 0.87 | 1.15 |
| dMOR (mm) | 2.4 | 2.1 | 2.1 | 2.6 |
| E-MOD (MPa) | 11.8 | 10.5 | 10.8 | 11.2 |
| Density (g/cm³) | 1.60 | 1.52 | 1.52 | 1.53 |

The data in Table 9 indicate that the replacement of calcium carbonate with an equivalent amount of non-carbonated waste material leads to a minor decrease in strength and increased brittleness, as apparent from a lower iMOR and lower dMOR. Using carbonated powder instead does not improve the performance, but rather decreases the performance. The performance increases only when using a carbonated powder that has been given a heat treatment of 400°C after carbonation. This applies both to strength and to elasticity as measured by iMOR and dMOR.

### Conclusion

Experimental data confirm that performance of cementitious products comprising carbonated powder is improved when performing a heat treatment at 400°C. In strength experiments submitted during prosecution of WO2023/046498A1, it was shown that the strength of composite cements with 40% carbonated powder increases with about 7% (from 23.0 to 24.6 MPa), when using carbonated powder on which a heat treatment of 200°C was performed. The major strength increase was however between the use of non-carbonated powder and carbonated powder (from 18.6 to 23.0 MPa). **In** the present experiments, particularly when using higher amounts of carbonated waste, i.e. 15% or 20%, it was found that the use of a carbonated powder does not improve performance over a non-carbonated powder. The use of a carbonated powder merely improves performance when a heat treatment is applied after the carbonation.

**It** is believed that the origin of this behaviour resides in the reactivity of the alumina-silica gel forming part of the carbonated powder. Rather than requiring an increased reactivity for enhanced strength, the pozzolanic reactivity must be slowed down; the carbonated powder as such (not heat treated) may react too quickly for the conventional process steps in fibre cement production (Hatschek, flow-on or sedimentation-like production processes). **In** fact, there is some time lapse between a preparation of the aqueous cementitious composition and the generation of the green sheets. **In** order to obtain optimum strength, the pozzolanic material should rather be highly reactive when the green sheets are formed. A too rapid pozzolanic reaction and/or too high water retaining capacity, before the sheet is formed, may result in a worser particle packing. A too rapid pozzolanic reaction may also encapsulate carbonated fines and/or cement and prevent their further hydration and strength development in the fiber cement product at later curing ages.

## Claims

1. Use of a cementitious binder and a pozzolanic material in an aqueous cementitious composition, wherein said pozzolanic material is a material obtained by a method comprising carbonating a cementitious waste material and subsequently performing a heat treatment at a temperature in the range of 360°C to 500°C.

2. Use as claimed in claim 1, wherein the cementitious waste material that is carbonated is a cured material.

3. Use as claimed in claim 1 or 2, wherein the cementitious waste material is comminuted prior to carbonating.

4. Use as claimed in any of the claims 1-3, wherein the cementitious waste material comprises organic fibers, of which at least part is removed during the heat treatment.

5. Use as claimed in claim 4, wherein the cementitious waste material is or comprises a cured fiber cement waste material, such as waste material comprising air-cured fiber cement material, autoclave-cured fiber cement material or a combination thereof.

6. Use as claimed in any of the preceding claims, wherein said pozzolanic material has a total inorganic carbon (TIC) content of at least 3% by weight and a total organic carbon (TOC) content of at most 0.5% by weight, said % by weight based on dry weight of said pozzolanic material.

7. Use as claimed in claim 6, wherein said TOC content is at most 0.2% by weight based on dry weight of said pozzolanic material.

8. Use as claimed in claim 6 or 7, wherein said TIC content is at least 5% by weight based on dry weight of said pozzolanic material.

9. Use as claimed in any of the preceding claims, further comprising the step of processing said aqueous cementitious composition to form a cementitious product, preferably a fiber cement product.

10. Use as claimed in claim 9, wherein said processing step comprises:
- preparing a green article by means of a cementitious process technology;
- optionally applying a further treatment on said green article, such as modifying a shape, compressing said green article and/or laminating said green article, and thereafter
- curing the green article into the cementitious product.

11. An aqueous cementitious composition comprising a cementitious binder and a pozzolanic material, wherein said pozzolanic material is a material obtained by a method comprising carbonating a cementitious waste material and subsequently performing a heat treatment at a temperature in the range of 360°C to 500°C, said aqueous cementitious composition optionally comprising fiber, preferably organic fibers.

12. The aqueous cementitious composition as claimed in claim 11, wherein the pozzolanic material is according to any of the claims 2 to 8.

13. The aqueous composition as claimed in any of the preceding claims, wherein said pozzolanic material is present in an amount of 10-40% by dry weight of the aqueous composition.

14. A cementitious product obtainable by the use as claimed in any of the claims 9-10.

15. A method of generating a pozzolanic material, comprising the steps of:
- providing recycled cement material,
- commuting the cement recycled material to obtain cementitious powder,
- carbonating the cementitious powder to obtain carbonated cementitious powder as pozzolanic material,
- slowing down the pozzolanic activity of the pozzolanic material by applying a heat treatment at a temperature in the range of 360°C to 500°C,.
wherein said carbonated cementitious powder is preferably provided in a fibrous mixture further comprising organic fibers, preferably cellulose fibers, and wherein said heat treatment results in reducing an amount of said organic fibers, wherein the heat treatment is more preferably performed to remove all organic fibers.
